## Europäisches Patentamt

## European Patent Office

## Office européen des brevets

(11) Veröffentlichungsnummer: **0 133 510**

**B1**

---

(12) # EUROPÄISCHE PATENTSCHRIFT

(45) Veröffentlichungstag der Patentschrift:
15.10.86

(51) Int. Cl.⁴: **B 01 D 3/36, B 01 D 3/40**

(21) Anmeldenummer: 84108721.6

(22) Anmeldetag: 24.07.84

---

(54) Verfahren zur destillativen Zerlegung eines azeotropen Stoffgemisches.

---

(30) Priorität: 03.08.83 DE 3327952

(43) Veröffentlichungstag der Anmeldung:
27.02.85 Patentblatt 85/9

(45) Bekanntmachung des Hinweises auf die Patenterteilung:
15.10.86 Patentblatt 86/42

(84) Benannte Vertragsstaaten:
BE CH DE FR GB IT LI NL

(56) Entgegenhaltungen:
US-A-3 142 016
US-A-3 881 994
US-A-4 419 188

(73) Patentinhaber: BASF Aktiengesellschaft, Carl-Bosch- Strasse 38, D-6700 Ludwigshafen (DE)

(72) Erfinder: Kaibel, Gerd, Robert- Bosch- Strasse 4, D-6840 Lampertheim (DE)

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren nach dem Oberbegriff des Anspruchs 1.

Es ist bekannt, zur bestillativen Zerlegung eines azeotropen Zweistoffgemisches in seine Einzelkomponenten verschiedene destillative Verfahren einzusetzen. Dies sind im wesentlichen die Zweidruckdestillation, die azeotrope Destillation und die extraktive Destillation. Diese 3 Destillationsverfahren sind ausführlich im Lehrbuch von R. Billet, "Industrielle Destillation", Jahr 1972, Seiten 223 bis 231, beschrieben. Des weiteren wird auf die US-Patentschrift 4 419 188, insbesondere Figur 4 und die entspechenden Erläuterungen verwiesen.

Als Nachteil erweist sich bei allen erwähnten Destillationsverfahren, daß mindestens 2 Destillationskolonnen zur Auftrennung des azeotropen Zweistoffgemisches notwendig sind. Daraus resultiert apparativ und meß- und regeltechnisch ein erhöhter Aufwand.

Aufgabe der vorliegenden Erfindung ist es, die destillative Zerlegung von azeotropen Zweistoffgemischen zu vereinfachen, d.h. in einem einstufigen Destillationsverfahren, mittels einer Destillationskolonne, durchzuführen.

Diese Aufgabe wird durch die kennzeichnenden Merkmale des Anspruchs 1 gelöst.

Ein Ausführungsbeispiel der Erfindung ist in der Zeichnung dargestellt und wird im folgenden näher beschrieben.

Es zeigen

Figur 1
ein schematisches Verfahrensfließbild einer Destillationskolonne, bei der das azeotrope Zweistoffgemisch dem Zulaufteil und dem Entnahmeteil in Teilströmen jeweils am Kopf zugeführt werden.

Figur 2
ein schematisches Verfahrensfließbild einer Destillationskolonne, bei der das azeotrope Zweistoffgemisch ausschließlich dem Zulaufteil zugeführt wird.

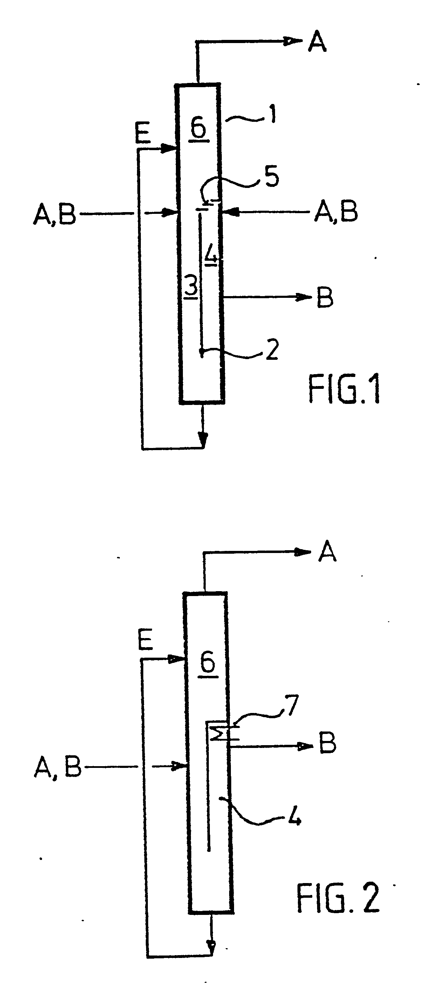

Gemäß Figur 1 wird eine Destillationskolonne 1—im folgenden Kolonne 1 genannt—durch eine in Längsrichtung wirksame Trenneinrichtung 2 in einen Zulaufteil 3 und einen Entnahmeteil 4 unterteilt. Der Entnahmeteil 4 ist am oberen Ende der Trenneinrichtung 2 durch einen Flüssigkeitsammler 5 üblicher Bauart so abgeschlossen, daß die von oben aus dem nicht unterteilten oberen Bereich 6 der Kolonne 1 herabströmende Flüssigkeit vollständig in den Zulaufteil 3 der Kolonne abgeleitet wird, so daß von dem nicht unterteilten oberen Bereich 6 keine Zusatzkomponente E (Extraktionsmittel) in den Entnahmeteil 4 gelangen kann. Dem Kopf des oben offenen Zulaufteils 3 und dem Kopf des oben Dampf durchlassenden, jedoch Flüssigkeit absperrenden Entnahmeteils 4 werden in Teilströmen des azeotrope Zweistoffgemisch A,B zugegeben. Die Zufuhr des Teilstroms am Kopf des Entnahmeteils 4 entspricht der erforderlichen Flüssigkeitsmenge für den Stoffaustausch innerhalb des Entnahmeteils 4. Diese Funktion erklärt, daß dieser Zulaufstrom bevorzugt flüssig und mit möglichst niedriger Temperatur zugegeben wird, um die Menge möglichst klein zu halten. Gemäß Figur 1 wird demnach das azeotrope Zweistoffgemisch A,B in Teilströmen jeweils dem Kopf oder in der Nähe des Kopfes des Zulaufteils und Entnahmeteils zugegehen, während die sich in der Zusatzkomponente E schlecht lösende Komponente A des Zweistoffgemisches in üblicher Weise über Kopf der Kolonne abdestilliert wird, und die sich in der Zusatzkomponente E leicht lösende Komponente B des Zweistoffgemisches dampfförmig oder flüssig aus dem Entnahmeteil abgezogen wird. Die Zusatzkomponente E wird wie bei der bekannten extraktiven Destillation in den oberen nicht unterteilten Bereich der Kolonne zugefahren und als Sumpfprodukt rein oder mit geringen Resten der sich leicht lösenden Komponente B als Sumpfprodukt abgezogen und gegebenenfalls im Kreislauf wieder der Kolonne zugeführt.

Gemäß Figur 2 ist der Entnahmeteil A am Kopf gegen den nicht unterteilten oberen Bereich 6 dicht abgeschlossen. Des weiteren ist der Kopf des Entnahmeteils 4 mit einem Kondesator 7 für die Teil- oder Totalkondensation der aus dem Entnahmeteil 4 abzuziehenden sich leicht lösenden Komponente 8 des Zweistoffgemisches ausgerüstet. Der Entnahmeteil 4 entspricht hier der nachgeschalteten Verstärkungssäule bei der bekannten.extraktiven Destillation zur Trennung der sich in der Zusatzkomponente leicht lösenden Komponente von der Zustazkomponente (Extraktionsmittel).

Im Gegensatz zu einfachen Destillationen in längsunterteilten Kolonnen ist die erfindungsgemäße Ausführung der Extraktivdestillation dadurch gekennzeichnet, daß die im Entnahmeteil abgezogene Seitenfraktion nur am unteren Ende der Längsunterteilung vorbei vom Zulauf- in den Entnahmeteil gelangt. Abgesehen vom Sonderfall einer Totalkondensation des im Entnahmeteil aufsteigenden Brüdens am oberen Ende der Längsunterteilung kann sogar eine Strömung in umgekehrter Richtung stattfinden, d.h. eine Teilmenge der im Seitenabzug zu entnehmenden Fraktion gelangt am oberen Ende der Längsunterteilung aus dem Entnahmeteil zurück in den oberen gemeinsamen Kolonnenbereich bzw. den Zulaufteil.

Der entscheidende Vorteil des erfindungsgemäßen Verfahrens liegt darin, die Trennung eines azeotropen Zweistoffgemisches in seine Einzelkomponenten mittels einer Destillationskolonne durchzuführen.

## Patentanspruch

Verfahren zur destillativen Zerlegung eines azeotropen oder sich annähernd azeotrop verhaltenden, schwer destillativ trennbaren Stoffgemisches in zwei reine oder weitgehend reine Fraktionen durch Zugabe einer Zusatzkomponente—analog einer Extraktivdestillation—mittels einer Destillationskolonne, die in einem Teilbereich durch eine in Längsrichtung wirksame Trenneinrichtung, die eine Quervermischung von Flüssigkeits- und/oder Brüdenströmen Verhindert, in einen Zulaufteil und einen Entnahmeteil unterteilt ist, dadurch gekennzeichnet, daß dem Zulaufteil und dem Entnahmeteil das azeotrope Stoffgemisch in Teilströmen jeweils am Kopf oder in der Nähe des Kopfes zugeführt wird, und die zwei reinen oder weitgehend reinen Fraktionen als Kopfprodukt aus der Destillationskolonne und als Seitenprodukt aus dem Entnahmeteil abgezogen werden, wobei das Seitenprodukt nur am unteren Ende der Trenneinrichtung vorbei vom Zulaufin den Entnahmeteil gelangt.

### Revendication

Procédé pour la décomposition par distillation en deux fractions pures ou en grande partie pures d'un azéotrope ou d'un mélange de substances se comportant approximativement comme un azéotrope et difficilement séparable en ses constituants par distillation, par l'addition d'une composante supplémentaire—de manière analogue à une distillation extractive—à l'aide d'une colonne de distillation qui est partiellement subdivisée par un dispositif séparateur actif en direction longitudinale, qui empêche un mélange transversal de courants de liquide et/ou de vapeurs, en une partie d'addition et en une partie de prélèvement, caractérisé en ce que l'on amène le mélange de substances azéotrope à la partie d'addition et à la partie de prélèvement sous la forme de courants partiels par la tête ou au voisinage de la tête et en ce que l'on soutire les deux fractions pures ou en grande partie pures sous forme de produit de tête de la colonne de distillation et sous forme de produit latéral de la partie de prélèvement, si bien que ce n'est qu'au delà de la partie inférieure du dispositif séparateur que le produit latéral parvient de la partie d'addition dans la partie de prélèvement.

### Claim

A process for separating a mixture which is azeotropic or behaves almost azeotropically and is difficult to separate by distillation, into two pure or substantially pure fractions by distillation, by adding a further component, using a procedure which is similar to extractive distillation and is carried out in a distillation column, a section of which is divided into a feed part and a take-off part by a separating means which is effective in the longitudinal direction and prevents cross-mixing of liquid streams and/or vapor streams, wherein the azeotropic mixture is fed in part-streams to the feed part and to the take-off part, in each case at or near the top, and one of the two pure or substantially pure fractions is removed as overhead product from the distillation column, and the other fraction is removed as side product from the take-off part, the side product passing from the feed part into the take-off part only at the lower end of the separating means.

FIG.1

FIG.2